## Europäisches Patentamt

## European Patent Office

## Office européen des brevets

(11) Publication number: **0 164 418**
**B1**

## (12) EUROPEAN PATENT SPECIFICATION

(45) Date of publication of patent specification: **10.01.90**

(21) Application number: **84904160.3**

(22) Date of filing: **08.11.84**

(86) International application number:
**PCT/JP84/00533**

(87) International publication number:
**WO 85/02278 23.05.85 Gazette 85/12**

(51) Int. Cl.⁵: **G 06 F 9/28**

(54) MICROPROGRAM CONTROL SYSTEM.

(30) Priority: **10.11.83 JP 211230/83**
**10.11.83 JP 211232/83**

(43) Date of publication of application:
**18.12.85 Bulletin 85/51**

(45) Publication of the grant of the patent:
**10.01.90 Bulletin 90/02**

(84) Designated Contracting States:
**DE FR GB**

(56) References cited:
**GB-A-2 046 963**
**JP-A-5 748 139**
**US-A-3 800 293**
**US-A-4 228 497**

**IBM TECHNICAL DISCLOSURE BULLETIN, vol. 25, no. 8, January 1983, pages 4300-4301, New York, US; D.W. FINNEY et al.: "NLM ROS bit sets up unique first microcycle"**

(73) Proprietor: **FUJITSU LIMITED**
**1015, Kamikodanaka Nakahara-ku**
**Kawasaki-shi Kanagawa 211 (JP)**

(72) Inventor: **KITAMURA, Toshiaki**
**24-62-2-1008, Tamagawa 2-chome**
**Ota-ku Tokyo 146 (JP)**
Inventor: **ONISHI, Katsumi**
**2-137, Shimoshingashi**
**Kawagoe-shi Saitama 356 (JP)**
Inventor: **OINAGA, Yuji**
**28-15, Kamiuma 4-chome**
**Setagaya-ku Tokyo 154 (JP)**

(74) Representative: **Muir, Ian R. et al**
**HASELTINE LAKE & CO. Hazlitt House 28**
**Southampton Buildings Chancery Lane**
**London WC2A 1AT (GB)**

Courier Press, Leamington Spa, England.

EP 0 164 418 B1

## Description

The present invention relates to a microprogram control system, and particularly to a microprogram control system in a data processing unit employing a pipeline control system.

Background Art

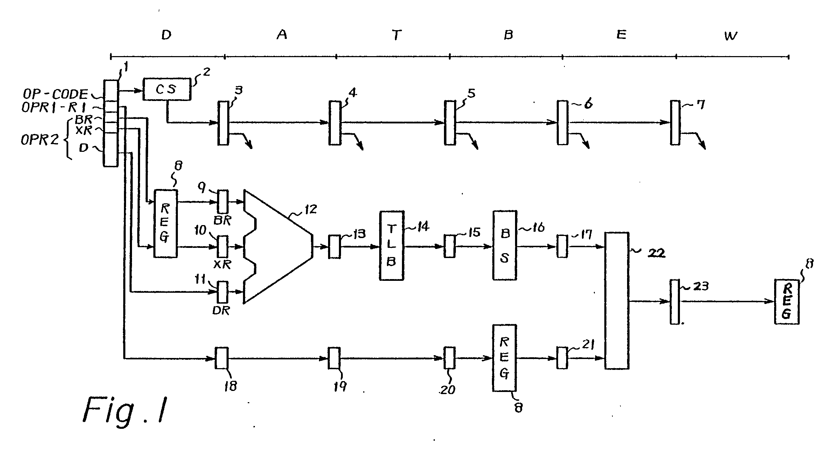

As shown in Fig. 1, for example, prefetched instructions are executed by a pipeline processor in successive stages, indicated as D, A, T, B, E and W.

In Fig. 1, 1 is an instruction word register (or an instruction word). 2 is a control memory storing microinstructions. 3 to 7 are microinstruction field registers which issue instructions to hardware for required processings in stages D to W. 8 indicates registers of a general purpose register group. 9 is a base register. 10 is an index register. 11 is a displacement register. 12 is an address calculator. 13 is a logical address register. 14 is a TLB (address Translation Buffer). 15 is an address buffer. 16 is a buffer memory. 17 is an operand register. 18 to 20 are operand buffer registers. 21 is an operand register. 22 is an operation unit. 23 is a result register. The general purpose register group 8 is a register group which is used in each of the three stages, D, B and W; that is, at three different timings.

When an instruction 1 is supplied to the pipeline indicated in Fig. 1, a microinstruction required for executing the pertinent instruction 1 is read and set in register 3 in stage D. Simultaneously, values (BR, XR, DR) are set in registers 9, 10, 11 for the purpose of calculating an address for an operand (operand 2 — OPR 2 — in the Figure) which is required for executing the pertinent instruction 1. The address of said operand 2 (OPR 2) is calculated by the calculator 12 in stage A and the result is set in logical address register 13. Next, TLB 14 and buffer memory 16 are indexed through stages T and B and a value of said operand 2 (OPR 2) is set in register 17. At this time, a value of operand 1 (OPR 1 — R1) is also set in register 21. In this condition, the specified operation is carried out by the operation unit 22 in stage E and the operation result is set to a general purpose register 8 in stage W.

Pipeline control is carried out as explained above and processings for each stage advance in such a way that microinstructions are read from the control memory 2 shown in the Figure and these instructions are executed sequentially. On the other hand, when executing the given instruction 1, the necessary processings may sometimes not be completed merely by carrying out the processings executed through pipeline processing stages from stage D to stage W in Fig. 1 (called a processing flow). In general, a plurality of processing flows are required for the execution of one instruction and respective processing flows are executed in terms of microinstructions. In this case, bit groups of microinstructions corresponding to one processing flow read from the control memory 2 are forced to correspond to the controls of respective stages of the pipeline, and thereby respective corresponding bit groups instruct processings in respective stages, from the registers 3, 4, 5, 6, 7 shown in Fig. 1.

As explained above, an instruction 1 may be such as to require a plurality of processing flows, and the processings involved have been effected by reading microinstructions corresponding to the respective processing flows from the control memory 2. However, there is restriction in time for making access to the control memory 2 and therefore control in respect of stage D in each processing flow has been effected by means of hardware, and it has been difficult to employ control by microprograms.

Accordingly, an increased quantity of hardware is needed, and in the event that a modification of functions at stage D is required, the hardware must be modified. Thereby, although the data processing unit operates on the basis of a microprogram control system, it cannot exhibit sufficient flexibility of microprogram control in relation to modification of functions. Therefore, a system in which microprogram control is realized at all stages is desirable.

Namely, a prior art microprogram control system which controls a data processing unit for carrying out pipeline processings takes a longer time for reading control memory and suffers delays on timing for control of the first stage (stage D) of the pipeline. As a result, this stage has been controlled by a hardware decoder, or a dummy cycle has been inserted for reading of the control memory.

Control by hardware, however, has a disadvantage in that it is difficult to realise flexible and sophisticated control, whilst the method involving insertion of a dummy cycle is attended by a disadvantage in that the dummy cycle reduces processing speed, appearing between processing times at the interval of instructions.

IBM Technical Disclosure Bulletin, Vol. 25, No. 8, January 1983, pp 4300/4301, discusses a method for allowing the first microcycle of each instruction to be unique, rather than always the same, in an IBM Series/1 4955 processor having a three-microcycle pipeline overlap. To accomplish this the address of a "first" microcycle is set up in a "next-to-last" microcycle (i.e. two microcycles before the "first" microcycle).

Disclosure of the Invention

Considering the above-mentioned disadvantages of the prior art, it is an object of the present invention to provide a system for microprogram control of the first stage of a pipeline.

According to the present invention, there is provided a microprogram control system in a data processing unit employing pipeline processing and operable to execute an instruction in a plurality of processing flows through a pipeline consisting of a plurality of stages, under control of a microprogram, characterised in that

microinstructions of the microprogram are divided each into a first part, for controlling a first stage of the pipeline in processing flow corresponding to the microinstruction, and a second part, for controlling second and subsequent stages of the pipeline in that processing flow,

and in that

the first part of a microinstruction for controlling one processing flow is read simultaneously with the second part of a microinstruction for controlling an immediately preceding processing flow.

Thus, according to the present invention, the object of the invention can be attained by providing a method in which the microinstructions are divided into a part for controlling said first stage D of the pipeline and a part for controlling the second and successive stages (A to W) of the pipeline, the part for controlling the first stage for one processing flow being read simultaneously with the part for controlling the second and successive stages for the immediately preceding processing flow. Thereby, the method of the present invention provides an advantage in that the first stage of pipeline can be controlled by microprogram and a data processing unit which is more flexible in pipeline processing execution than that of prior art can be constituted.

Briefly, a field for controlling the first stage of a pipeline is separated from the fields for controlling the other stages and it is read (for the current processing flow) with the same timing as the reading of those fields for controlling second and successive stages for the processing flow just prior to the current processing flow. Thereby, the first stage of pipeline is controlled by microprograms.

Thus, flexibility is provided for the system by skillfully reading microinstructions, and avoiding hardware control in the constitution of the system, in order to execute processing with microinstructions corresponding to respective flows with an instruction developed for processing in several flows.

Brief Description of the Drawings

Fig. 1 illustrates the structure of a pipeline for executing instructions as processings advance along the pipeline.

Fig. 2 illustrates the concept of control in accordance with the present invention.

Figs. 3 illustrate logical structure of a control memory of an embodiment of the present invention.

Fig. 4 is a block diagram of an embodiment of the present invention.

Fig. 5 is a block diagram of another embodiment of the present invention.

Best Mode of Carrying Out the Invention

Even when the present invention is applied, stage D of a first processing flow in controlled for execution of instruction 1 by means of hardware, because there is no time for reading the control memory 2.

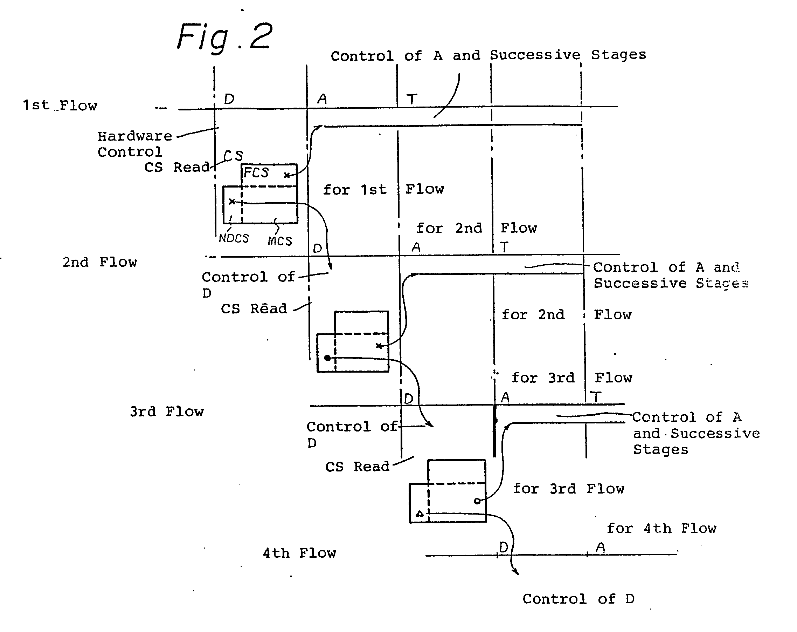

As illustrated in Fig. 2, in stage D of the first processing flow, microinstructions are read simultaneously from a part (hereinafter referred to as FCS) of the control memory CS corresponding to stage A and successive stages and from a part (hereinafter referred to as NDCS) of the control memory for stage D. The microinstructions read from FCS are used for controlling stage A and successive stages for the first processing flow and the microinstructions read from NDCS are used for controlling stage D for the second processing flow.

In stage D of the second processing flow, microinstructions to be used for controlling stage A and successive stages for the second processing flow are read from a part (hereinafter referred to as MCS) of the control memory corresponding to stage A and successive stages of the second flow and of successive flows, and simultaneously the microinstructions to be used for control of stage D for the third flow are read from NDCS.

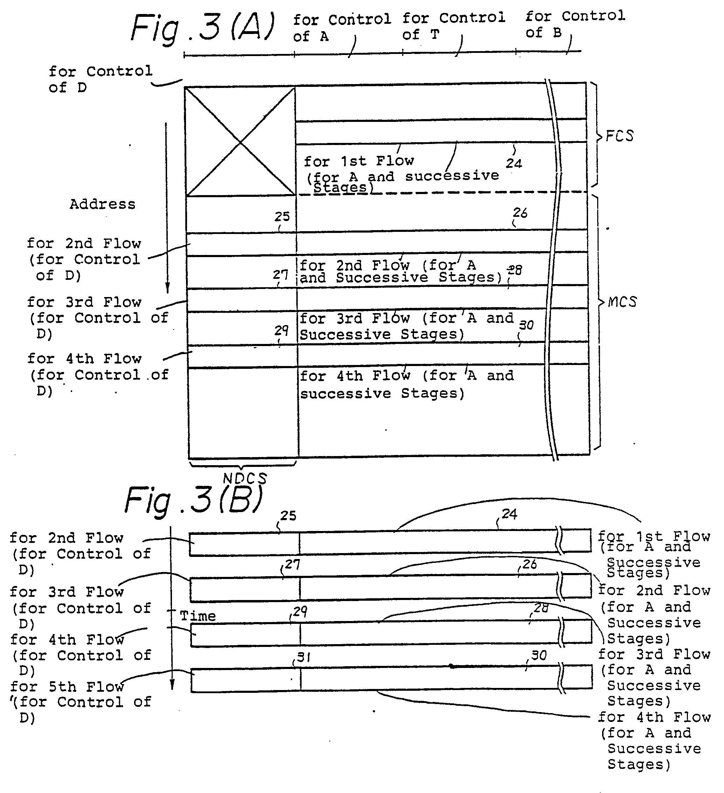

An interrelationship between the logical constitution of the different control memory parts to which access is made as explained above and the fields read at the same timing are illustrated in Fig. 3(A).

In this Figure, D, A, T, . . . . . indicate the positions of fields in microinstructions for controlling those respective stages.

The part indicated by X (top left corner) indicates there is no corresponding part in the NDCS, because stage D for the first processing flow in controlled by hardware.

As is apparent from Fig. 3(A), even when the field for controlling the stage D which forms the microinstructions corresponding to the first flow and the fields for controlling the stages A, T, . . . . ., are separated between NDCS and MCS, access can be realised by the same address. However, regarding read timing, as shown in Fig. 3(B), in stage D of the first flow, field 24, corresponding to control of stage A and successive stages for the first flow, and field 25, corresponding to control of stage D for the second flow, are read at the same timing. In stage D of the second flow shown in Fig. 2, field 26, corresponding to control for stage A and successive stages for the second flow, and field 27, corresponding to control of stage D for the third flow, are read in the same timing. Similar processings are repeated for the successive stages.

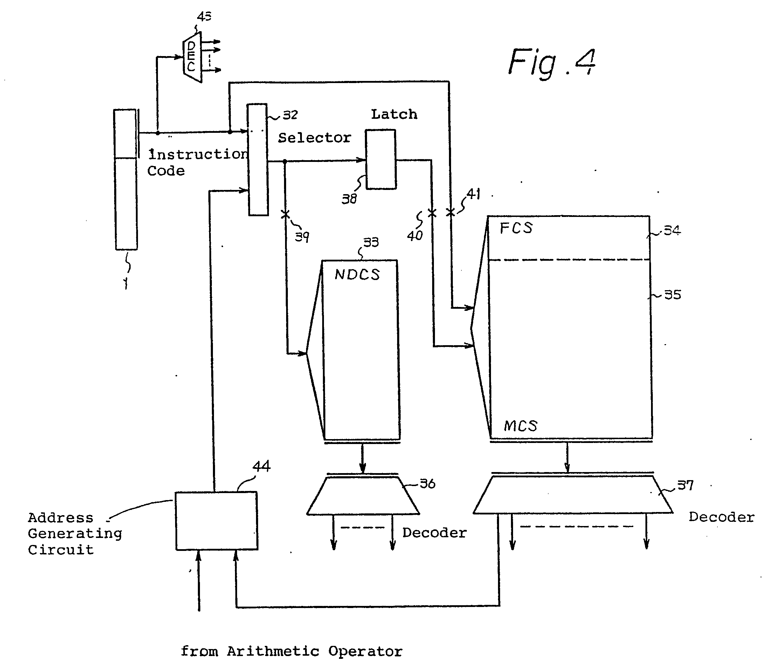

Fig. 4 is a profile explained by reference to Fig. 2 and Figs. 3 and which shows a block diagram of an embodiment for making access to the parts of the control memory 2 shown in Fig. 1 and Figs. 3(A) and 3(B). In Fig. 4, 32 is a selector; 33 is a control memory part (NDCS) for stage D; 34 is a part (FCS) of the control memory corresponding to stage A and successive stages of the first flow; 35 is a part (NCS) of the control memory corresponding to stage A and successive stages for the second and successive flows; 36, 37 are decoders; 38 is a latch; 39 to 41 are gates. 43 is a decoder for cycle D of the first flow and 44 is a circuit for generating control memory addresses for the second and successive flows.

A method of making access to the control memories in accordance with the present invention is explained hereunder by referring to Figs. 3 and 4.

When an instruction to be executed is set in the instruction register 1, access is made to FCS 34 in accordance with the operation code, with the timing of stage D for the first processing flow for executing said instruction and thereby the field of the microinstruction to be used for control of stage A and successive stages for the first flow are read. Simultaneously, access is also made to NDCS 33 through the selector 32, and thereby the fields of the microinstruction to be used for control of stage D for the second flow are read and the control signals to be used for control in each stage are output by the decoders 36, 37.

The addresses used for said accesses are stored in the latch 38, access is also made to MCS 35 at the timing of stage D of the second flow. Thus, the fields of the microinstruction used for the control of stage A and successive stages in the second flow are read out. Simultaneously, access is made to the NDCS 33 through the selector 32 using the next microaddreses generated by the address generating circuit (44) on the basis of the address part of the microinstruction used for the control of stage A and successive stages of the first flow which has been read previously. Thereby, the fields of microinstruction to be used for the control of stage D of the third flow, is read out. Said address is stored in the latch 38 and access is made to MCS 35 in stage D of the next flow.

Thereafter, in similar manner, access is made to control memory part (MCS) 35 to read the microinstruction fields used for control of stage A and successive stages of a flow using the address stored in latch 38 in stage D of the flow. Simultaneously, access is made to control memory (NDCS) 33 for stage D of the next flow, using an output of the address generating circuit, to read the microinstruction field to be used for the control of that stage and is followed by repetition of storage of the relevant address in the latch 38.

With the above operations, a control system based on microprograms can be applied to the first stage D of the pipeline, which has previously been controlled by hardware.

It is desirable to employ the constitution illustrated in Fig. 4, but this constitution contains controversial points. Namely, when processing is executed by developing it into a plurality of flows as explained above, it is certain that processing contents of the first flow are different from those of the second flow and that the number of control points for the first flow can be lower than the number of control points for the second and successive flows. In Fig. 4, the bit width of contents stored in FCS is equal to the bit width of contents stored in MCS, without consideration of the above fact. Particularly, in current large-scale data processing units, a majority of general instructions are processed in a single first flow. Therefore, it is desirable to effectively use the difference between a microinstruction corresponding to a first flow and a microinstruction corresponding to a second flow.

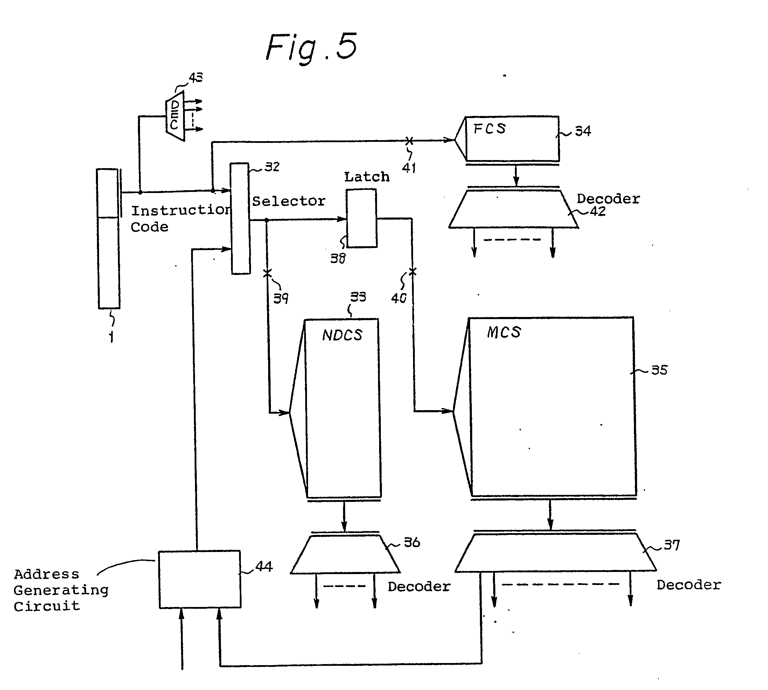

Fig. 5 shows a block diagram of an embodiment of the present invention modified in consideration of the above-mentioned facts. In Fig. 5, items referenced 32 to 41 correspond to those items in Fig. 4, and 42 is a decoder for FCS 34.

Operations in the embodiment constituted as in Fig. 5 can be thought of as the same as those in the embodiment of Fig. 4. However, the bit width of FCS 34 shown in Fig. 5 is smaller than that of MCS 35 and the control memory in Fig. 5 is more effectively used as compared with Fig. 4 and moreover access time is curtailed insofar as bit width and address range are reduced.

## Claims

1. A microprogram control system in a data processing unit employing pipeline processing and operable to execute an instruction in a plurality of processing flows through a pipeline consisting of a plurality of stages (D, A, T, B, E, W), under control of a microprogram,
characterised in that
microinstructions of the microprogram are divided each into a first part, for controlling a first stage (D) of the pipeline in processing flow corresponding to the microinstruction, and a second part, for controlling second and subsequent stages (A, T, B, E, W) of the pipeline in that processing flow,
and in that
the first part of a microinstruction for controlling one processing flow is read simultaneously with the second part of a microinstruction for controlling an immediately preceding processing flow.

2. A system as claimed in claim 1, comprising
a first memory (NDCS) storing the first parts of said microinstructions,
a second memory (MCS, FCS) storing the second parts of said microinstructions, and
delay means (38) operable to delay address information used for addressing the first memory (NDCS) in one processing flow, and to apply the delayed address information for addressing the second memory (MCS) in the next processing flow.

3. A system as claimed in claim 2, wherein the second memory comprises
a first portion (FCS) which stores the second part of a microinstruction used for controlling the first processing flow of the pipeline for execution of said instruction, and a second portion (MCS) which stores the second part of the or each microinstruction used for controlling second and subsequent processing flows of the pipeline for execution of said instruction.

4. A system as claimed in claim 3, wherein the bit widths of the first (FCS) and second (MCS) portions are different.

5. A system as claimed in any preceding claim, wherein control of the first stage (D) of the pipeline in the first processing flow for execution of said instruction is effected by hardware.

**Patentansprüche**

1. Mikroprogramm-Steuersystem in einer Datenverarbeitungseinheit, die Pipeline-Verarbeitung verwendet und betreibbar ist, um einen Befehl in einer Vielzahl von Verarbeitungsflüssen durch eine Pipeline auszuführen, welche aus einer Vielzahl von Stufen (D, A, T, B, E, W) besteht, unter Steuerung eines Mikroprogramms,
dadurch gekennzeichnet, daß
Mikrobefehle in dem Mikroprogramm jeweils in einen ersten Teil, zur Steuerung einer ersten Stufe (D) der Pipeline in dem Verarbeitungsfluß, welcher dem Mikrobefehl entspricht, und in einen zweiten Teil, zur Steuerung zweiter und folgender Stufen (A, T, B, E, W) der Pipeline in jenem Verarbeitungsfluß, unterteilt sind,
und daß
der erste Teil eines Mikrobefehls zur Steuerung eines Verarbeitungsflusses gleichzeitig mit dem zweiten Teil des Mikrobefehls zur Steuerung eines unmittelbar vorhergehenden Verarbeitungsflusses gelesen wird.

2. System nach Anspruch 1, mit
einem ersten Speicher (NDCS), der die ersten Teile der genannten Mikrobefehle speichert,
einem zweiten Speicher (MCS, FCS), der die zweiten Teile der genannten Mikrobefehle speichert, und
Verzögerungseinrichtungen (38), die betreibbar sind, um Adreßinformation zu verzögern, die zur Adressierung des ersten Speichers (NDCS) in einem Verarbeitungsfluß verwendet wird, und um die verzögerte Adreßinformation zur Adressierung des zweiten Speichers (MCS) bei dem nächsten Verarbeitungsfluß anzuwenden.

3. System nach Anspruch 2, bei dem der zweite Speicher umfaßt
einen ersten Abschnitt (FCS), der den zweiten Teil eines Mikrobefehls speichert, der zur Steuerung des ersten Verarbeitungsflusses der Pipeline zur Ausführung des genannten Befehls verwendet wird, und einen zweiten Abschnitt (MCS), der den zweiten Teil von dem oder jedem Mikrobefehl speichert, der zur Steuerung des zweiten und folgender Verarbeitungsflüsse der Pipeline zur Ausführung des genannten Mikrobefehls verwendet wird.

4. System nach Anspruch 3, bei dem die Bitbreiten der ersten (FCS) und zweiten (MCS) Abschnitte verschieden sind.

5. System nach einem der vorhergehenden Ansprüche, bei dem die Steuerung der ersten Stufe (D) der Pipeline in dem ersten Verarbeitungsfluß zur Ausführung des genannten Befehls durch Hardware bewirkt wird.

**Revendications**

1. Système de commande par microprogramme ou microprogrammé dans une unité de traitement de données mettant en oeuvre un traitement par pipeline et pouvant être mis en fonctionnement pour exécuter une instruction dans un ensemble de déroulements de traitement par l'intermédiaire d'un pipeline constitué d'un ensemble d'étages (D, A, T, B, E, W), sous la commande d'un microprogramme,
caractérisé en ce que
les micro-instructions du microprogramme sont divisées chacune en une première partie, pour commander un premier étage (D) du pipeline dans un déroulement de traitement correspondant à la micro-instruction, et une deuxième partie, pour commander un deuxième étage et les étages suivants (A, T, B, E, W) du pipeline dans ce déroulement de traitement,
et en ce que
la première partie d'une micro-instruction pour commander un déroulement de traitement est lue simultanément avec la deuxième partie d'une micro-instruction pour commander un déroulement de traitement le précédant immédiatement.

2. Système selon la revendication 1, comprenant
une première mémoire (NDCS) mémorisant les premières parties des micro-instructions,
une deuxième mémoire (MCS, FCS) mémorisant les deuxièmes parties des micro-instructions, et
un moyen à retard (38) pouvant être mis en fonctionnement pour retarder les informations d'adresse utilisées pour adresser la première mémoire (NDCS) dans un déroulement de traitement, et pour appliquer les informations d'adresse retardées pour adresser la deuxième mémoire (MCS) dans le déroulement de traitement suivant.

3. Système selon la revendication 2, dans lequel la deuxième mémoire comprend
une première portion (FCS) qui mémorise la deuxième partie d'une micro-instruction utilisée pour commander le premier déroulement de traitement du pipeline pour l'exécution de l'instruction, et une deuxième portion (MCS) qui mémorise la deuxième partie de la ou de chaque micro-instruction utilisée pour commander un deuxième déroulement de traitement et les déroulements de traitement suivants du pipeline pour l'exécution de l'instruction.

4. Système selon la revendication 3, dans lequel les largeurs en bits des première (FCS) et deuxième (MCS) portions sont différentes.

5. Système selon l'une quelconque des revendications 1 à 4, dans lequel la commande du premier étage (D) du pipeline dans le premier déroulement de traitement pour l'exécution de l'instruction est effectuée par le matériel.

EP 0 164 418 B1

D    A    T    B    E    W

OP-CODE
OPR1-R1
BR
XR
OPR2 { 
D

1
2 CS
3
4
5
~6
~7

8 REG
9 BR
10 XR
11 DR
12
13
TLB 14
15
BS 16
~17
22
~23
8 REG

18
19
20
REG
8
~21

*Fig. I*

# Fig.2

Control of A and Successive Stages

1st Flow — D    A    T

Hardware Control
CS Read    CS
FCS ✗

for 1st Flow

NDCS    MCS

for 2nd Flow

2nd Flow    D    A    T

Control of D
CS Read

Control of A and Successive Stages

for 2nd Flow

for 3rd Flow

3rd Flow    D    A    T

Control of D
CS Read

Control of A and Successive Stages

for 3rd Flow

for 4th Flow

4th Flow    D    A

Control of D

EP 0 164 418 B1

Fig. 3 (A)

for Control of D

Address

for 2nd Flow (for Control of D)

for 3rd Flow (for Control of D)

for 4th Flow (for Control of D)

for Control of A

for Control of T

for Control of B

FCS

for 1st Flow (for A and successive Stages)   24

25   26

for 2nd Flow (for A and Successive Stages) 28

27

for 3rd Flow (for A and Successive Stages) 30

29

for 4th Flow (for A and successive Stages)

MCS

NDCS

Fig. 3 (B)

for 2nd Flow (for Control of D)

for 3rd Flow (for Control of D)

for 4th Flow (for Control of D)

for 5th Flow (for Control of D)

Time

25   24

for 1st Flow (for A and Successive Stages)

27   26

for 2nd Flow (for A and Successive Stages)

29   28

for 3rd Flow (for A and Successive Stages)

31   30

for 4th Flow (for A and Successive Stages)

Fig.4

from Arithmetic Operator

Fig.5

EP 0 164 418 B1